# EUROPÄISCHE PATENTSCHRIFT

(11) **EP 3 045 873 B1**
(45) Veröffentlichungstag und Bekanntmachung des Hinweises auf die Patenterteilung: **28.06.2017**
(21) Anmeldenummer: 15199750.9
(22) Anmeldetag: 14.12.2015
(51) Int. Cl.: G01D 5/26, G01B 11/00

(54) **OPTISCHE POSITIONSMESSEINRICHTUNG**
OPTICAL POSITIONING DEVICE
DISPOSITIF OPTIQUE DE MESURE DE POSITION

(30) Priorität: 13.01.2015 DE 102015200293
(43) Veröffentlichungstag der Anmeldung: 20.07.2016
(73) Patentinhaber: Dr. Johannes Heidenhain GmbH, 83301 Traunreut (DE)
(72) Erfinder: HUBER, Walter, 83278 Traunstein (DE)

(56) Entgegenhaltungen:
- JP-A- 2005 326 231
- US-A1- 2013 114 062
- US-A1- 2014 374 579
- US-B2- 8 472 029

## Beschreibung

### GEBIET DER TECHNIK

Die vorliegende Erfindung betrifft eine optische Positionsmesseinrichtung gemäß dem Oberbegriff von Anspruch 1. Diese Positionsmesseinrichtung ist geeignet, um gleichzeitig einen vertikalen und mindestens einen lateralen Freiheitsgrad von zwei zueinander beweglichen Objekte zu erfassen.

### STAND DER TECHNIK

Eine gattungsgemäße optische Positionsmesseinrichtung ist etwa aus Figur 6 der JP 2005-326231 A bekannt. Diese Positionsmesseinrichtung dient zur Erfassung der Relativposition von zwei zueinander beweglichen Objekten und besteht aus einer Abtasteinheit, die mit einem der Objekte verbunden ist und einer Reflexions-Maßverkörperung, die mit dem anderen der beiden Objekte verbunden ist. Relative Positionsinformationen bezüglich der beiden Objekte resultieren aus der interferierenden Überlagerung mindestens zweier Paare von Teilstrahlenbündeln. Hierbei erfährt ein von einer Lichtquelle her einfallendes Strahlenbündel in der Abtasteinheit in einer ersten Aufspaltebene über ein erstes Aufspaltelement eine Aufspaltung in mindestens ein erstes, zweites und drittes Teilstrahlenbündel. Das erste und dritte Teilstrahlenbündel werden anschließend über Umlenkelemente in der Abtasteinheit in Richtung der Reflexions-Maßverkörperung umgelenkt. Das zweite Teilstrahlenbündel erfährt über ein zweites Aufspaltelement in der Abtasteinheit eine Aufspaltung in mindestens ein viertes und fünftes Teilstrahlenbündel, wobei das erste und vierte Teilstrahlenbündel in Richtung eines ersten Auftreffortes und das dritte und fünfte Teilstrahlenbündel in Richtung eines zweites Auftreffortes auf der Reflexions-Maßverkörperung propagieren. Das erste und zweite Paar von überlagerten Teilstrahlenbündeln propagiert nach der Reflexion an der Reflexions-Maßverkörperung in Richtung eines ersten und zweiten Detektors, wo die mindestens zwei Paare von Teilstrahlenbündeln jeweils zur interferierenden Überlagerung gelangen. Über die Detektoren sind verschiebungsabhängige Abtastsignale erfassbar, aus denen wiederum Positionsinformationen bezüglich einer vertikalen und einer ersten lateralen Verschiebungsrichtung der Objekte ableitbar sind.

Über eine derartige optische Positionsmesseinrichtung ist es demzufolge möglich, gleichzeitig einen lateralen und einen vertikalen Freiheitsgrad der zwei zueinander beweglichen Objekte zu erfassen.

Für Messaufgaben, in denen mehr als diese beiden Freiheitsgrade messtechnisch erfasst werden müssen, ist die aus der JP 2005-326231 A bekannte Vorrichtung nicht geeignet.

### ZUSAMMENFASSUNG DER ERFINDUNG

Der vorliegenden Erfindung liegt die Aufgabe zugrunde, eine optische Positionsmesseinrichtung der eingangs genannten Art zu schaffen, die eine hochpräzise räumliche Positionsbestimmung zweier zueinander beweglicher Objekte in mindestens drei räumlichen Freiheitsgraden ermöglicht.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung zur Erfassung der Relativposition von zwei zueinander beweglichen Objekten besteht aus einer Abtasteinheit, die mit einem der Objekte verbunden ist und einer Reflexions-Maßverkörperung, die mit dem anderen der beiden Objekte verbunden ist. Relative Positionsinformationen resultieren aus der interferierenden Überlagerung mindestens zweier Paare von Teilstrahlenbündeln, wozu
- ein von einer Lichtquelle her einfallendes Strahlenbündel in der Abtasteinheit über ein erstes Aufspaltelement eine Aufspaltung in mindestens ein erstes, zweites und drittes Teilstrahlenbündel in einer ersten Aufspaltebene erfährt und
- das erste und dritte Teilstrahlenbündel über Umlenkelemente in der Abtasteinheit eine Umlenkung in Richtung der Reflexions-Maßverkörperung erfahren, während das zweite Teilstrahlenbündel über ein zweites Aufspaltelement eine Aufspaltung in mindestens ein viertes und fünftes Teilstrahlenbündel erfährt, wobei das erste und vierte Teilstrahlenbündel in Richtung eines ersten Auftreffortes und das dritte und fünfte Teilstrahlenbündel in Richtung eines zweites Auftreffortes auf der Reflexions-Maßverkörperung propagiert,
- und das überlagerte erste und zweite Paar von Teilstrahlenbündeln nach der Reflexion an der Reflexions-Maßverkörperung in Richtung eines ersten und eines zweiten Detektors propagiert, wo die Teilstrahlenbündel in jedem Paar zur interferierenden Überlagerung gelangen, so dass über die Detektoren verschiebungsabhängige erste und zweite Abtastsignale erfassbar sind, aus denen Positionsinformationen bezüglich einer vertikalen und einer ersten lateralen Verschiebungsrichtung der Objekte ableitbar sind, wobei die erste laterale Verschiebungsrichtung in der ersten Aufspaltebene oder parallel hierzu verläuft. Das einfallende Strahlenbündel erfährt in der Abtasteinheit über das erste Aufspaltelement ferner eine Aufspaltung in weitere Teilstrahlenbündel in einer zweiten Aufspaltebene, die senkrecht zur ersten Aufspaltebene orientiert ist. Die Teilstrahlenbündel propagieren in der zweiten Aufspaltebene analog zu den Teilstrahlenbündeln in der ersten Aufspaltebene, so dass über dritte und vierte Detektoren verschiebungsabhängige dritte und vierte Abtastsignale erfassbar sind, aus denen Positionsinformationen bezüglich der vertikalen Verschiebungsrichtung und einer zweiten lateralen Verschiebungsrichtung der Objekte ableitbar sind, wobei die zweite laterale Verschiebungsrichtung in der zweiten Aufspaltebene oder parallel hierzu verläuft.

Mit Vorteil erfolgt über das erste Aufspaltelement ferner eine Aufspaltung in mindestens ein sechstes, siebtes und achtes Teilstrahlenbündel, wobei
- das sechste und achte Teilstrahlenbündel über weitere Umlenkelemente in der Abtasteinheit eine Umlenkung in Richtung der Reflexions-Maßverkörperung erfahren, während das siebte Teilstrahlenbündel über das zweite Aufspaltelement eine Aufspaltung in mindestens ein neuntes und zehntes Teilstrahlenbündel erfährt, wobei das sechste und neunte Teilstrahlenbündel in Richtung eines dritten Auftreffortes und das achte und zehnte Teilstrahlenbündel in Richtung eines vierten Auftreffortes auf der Reflexions-Maßverkörperung propagieren,
- und die überlagerten dritten und vierten Paare von Teilstrahlenbündeln nach der Reflexion an der Reflexions-Maßverkörperung in Richtung der dritten und vierten Detektoren propagieren, wo die zwei Paare von Teilstrahlenbündeln jeweils zur interferierenden Überlagerung gelangen, so dass über die dritten und vierten Detektoren die verschiebungsabhängigen dritten und vierten Abtastsignale erfassbar sind.

Es ist möglich, dass das erste Aufspaltelement und das zweite Aufspaltelement jeweils als zweidimensionale Beugungsstruktur in Kreuzlinien- oder Schachbrettanordnung ausgebildet ist.

Hierbei kann die zweidimensionale Beugungsstruktur als Amplitudengitter oder als Phasengitter ausgebildet sein.

Das erste Aufspaltelement und das zweite Aufspaltelement können jeweils als zweidimensionales Transmissions-Kreuzgitter ausgebildet sein.

Vorzugsweise sind die beiden Aufspaltebenen senkrecht zueinander orientiert.

Es ist desweiteren möglich, dass die Reflexions-Maßverkörperung als zweidimensionale Beugungsstruktur in Kreuzlinien- oder Schachbrettanordnung ausgebildet ist.

Dabei kann die zweidimensionale Beugungsstruktur als Amplitudengitter oder als Phasengitter ausgebildet sein.

Mit Vorteil ist die Reflexions-Maßverkörperung als zweidimensionales Reflexions-Kreuzgitter ausgebildet.

Ferner kann vorgesehen sein, dass die Abtasteinheit eine transparente Glasplatte umfasst,
- auf deren, dem einfallenden Lichtbündel zugewandten Seite, das erste Aufspaltelement angeordnet ist und
- auf deren, der Reflexions-Maßverkörperung zugewandten Seite das zweite Aufspaltelement sowie die Umlenkelemente angeordnet sind.

Hierbei können auf der Seite der Glasplatte, die dem einfallenden Lichtbündel zugewandt ist, ferner die vier Detektoren angeordnet sein, welche jeweils als strukturierte Photodetektoren ausgebildet sind, deren lichtempfindliche Flächen in Richtung der gegenüberliegenden Seite der Glasplatte orientiert sind.

Es ist hierbei möglich, dass die strukturierten Photodetektoren jeweils eine Mehrzahl von periodisch angeordneten Detektorelementen aufweisen, wobei phasengleiche Detektorelemente elektrisch miteinander verbunden sind.

Vorzugsweise sind dabei die strukturierten Photodetektoren aus α-Silizium ausgebildet und direkt strukturiert auf der Glasplatte angeordnet.

Es erweist sich weiterhin als günstig, dass die Detektoren in der gleichen Ebene angeordnet sind wie das erste Aufspaltelement.

Ebenfalls vorteilhaft ist, die Umlenkelemente als Transmissions-Lineargitter auszubilden.

Mit Hilfe der erfindungsgemäßen optischen Positionsmesseinrichtung lassen sich nunmehr mindestens drei räumliche Freiheitsgrade messtechnisch hochpräzise erfassen, nämlich eine vertikale Relativverschiebung zweier zueinander beweglicher Objekte sowie Relativverschiebungen dieser Objekte entlang zweier lateraler Verschiebungsrichtungen.

Weiterhin erweist sich als vorteilhaft, dass die erfindungsgemäße optische Positionsmesseinrichtung im Unterschied zum eingangs diskutierten Stand der Technik die Verwendung von Gittern mit kleinen Teilungsperioden erlaubt. Darüber wiederum sind besonders hochauflösende Abtastsignale erzeugbar, die eine sehr genaue Positionsbestimmung ermöglichen.

Ferner lassen sich unerwünschte Störstrahlen, die die Erzeugung der Abtastsignale negativ beeinflussen, in der erfindungsgemäßen Positionsmesseinrichtung besonders effektiv reduzieren.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

### KURZE BESCHREIBUNG DER ZEICHNUNGEN

Es zeigt
- Figur 1a: eine schematisierte Darstellung des Abtaststrahlengangs in der xz-Ebene eines Ausführungsbeispiels der erfindungsgemäßen optischen Positionsmesseinrichtung;
- Figur 1b: eine schematisierte Darstellung des Abtaststrahlengangs in der yz-Ebene eines Ausführungsbeispiels der erfindungsgemäßen optischen Positionsmesseinrichtung;
- Figur 2: eine Draufsicht auf die Reflexions-Maßverkörperung der optischen Positionsmesseinrichtung aus Figur 1;
- Figur 3a: eine Draufsicht auf die Seite der Glasplatte in der Abtasteinheit der der optischen Positionsmesseinrichtung aus Figur 1, die der Reflexions-Maßverkörperung zugewandt ist;
- Figur 3b: eine Draufsicht auf die Seite der Glasplatte in der Abtasteinheit der optischen Positionsmesseinrichtung aus Figur 1, die dem einfallenden Strahlenbündel zugewandt ist;
- Figur 4: Teil-Draufsichten auf die vier Detektoren der optischen Positionsmesseinrichtung aus Figur 1;
- Figur 5: eine stark schematisierte Darstellung zur Erläuterung der Signalverarbeitung in der optischen Positionsmesseinrichtung aus Figur 1.

### BESCHREIBUNG DER AUSFÜHRUNGSFORMEN

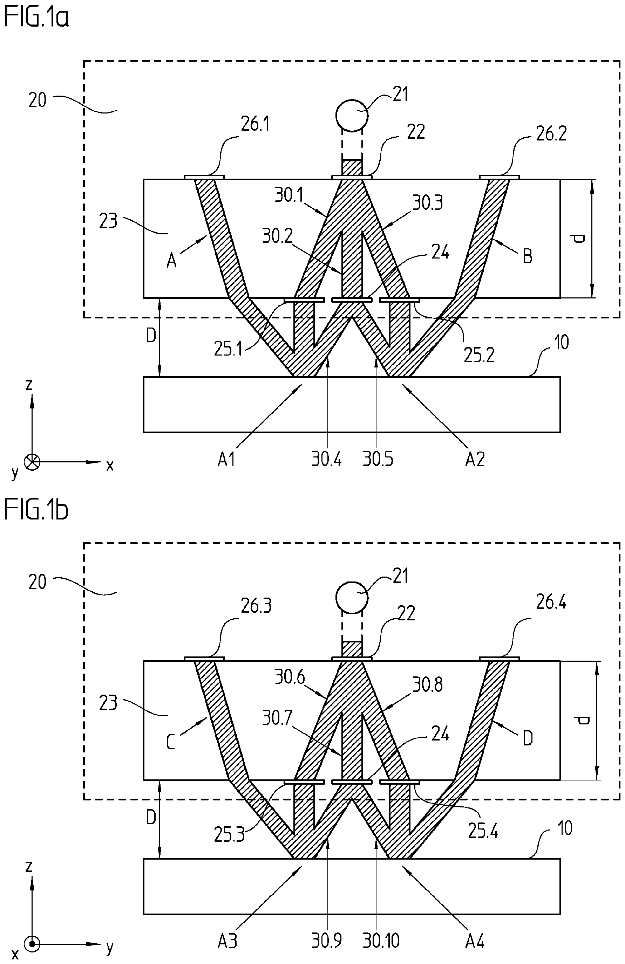

Ein Ausführungsbeispiel der erfindungsgemäßen optischen Positionsmesseinrichtung wird nachfolgend anhand der Figuren 1a, 1 b, 2, 3a, 3b, 4 und 5 erläutert.

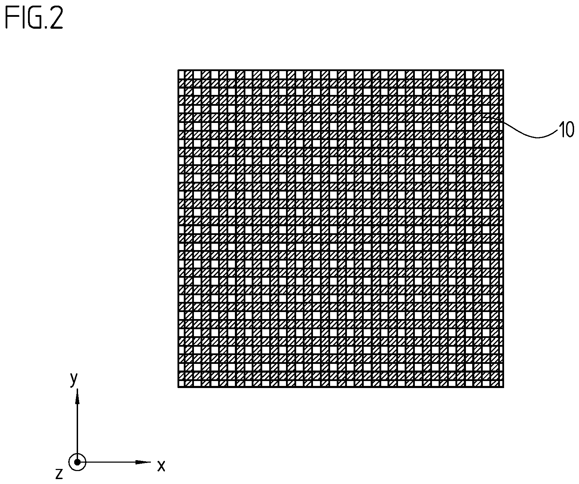

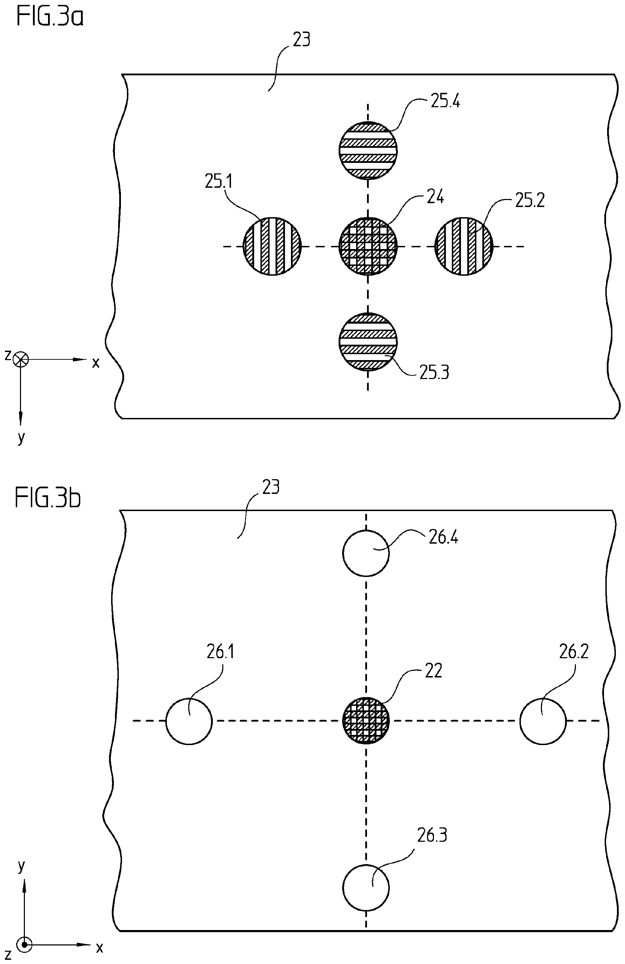

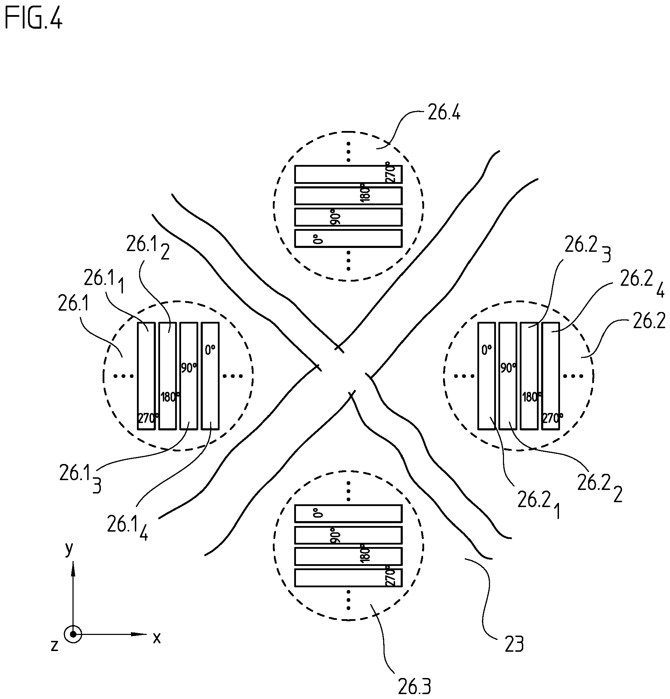

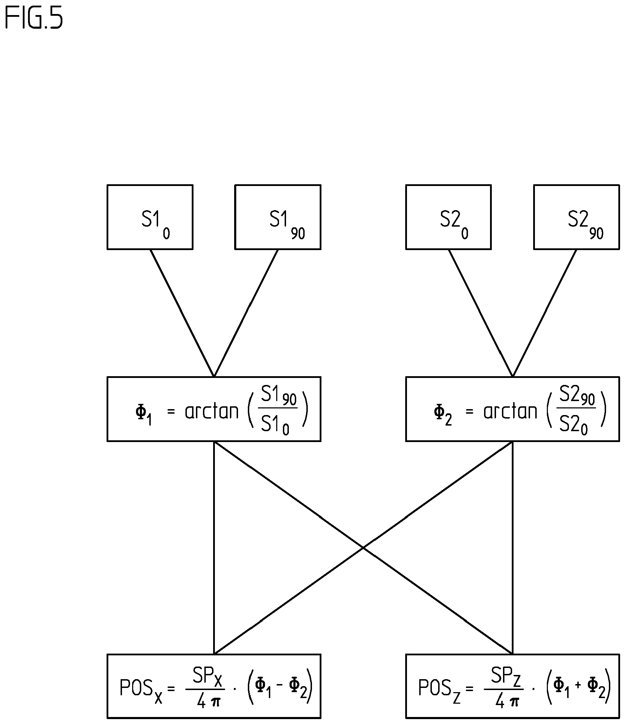

Die Figuren 1a, 1b zeigen hierbei in stark schematisierter Form die Abtaststrahlengänge in verschiedenen Ebenen, Fig. 2 eine Draufsicht auf die verwendete Reflexions-Maßverkörperung, Fig. 3a und Fig. 3b je eine Teilansicht der Ober- und Unterseite der verwendeten Glasplatte in der Abtasteinheit und Fig. 4 Teil-Draufsichten auf die vier Detektoren in der Abtasteinheit. Anhand der Darstellung in Figur 5 wird die Signalverarbeitung in der beschriebenen Positionsmesseinrichtung erläutert.

Die erfindungsgemäße optische Positionsmesseinrichtung besteht aus einer Abtasteinheit 20 sowie einer relativ hierzu beweglichen Reflexions-Maßverkörperung 10. Abtasteinheit 20 und Reflexions-Maßverkörperung 10 sind mit zwei zueinander beweglichen - nicht dargestellten - Objekten verbunden, deren Relativposition zu erfassen ist. Zwischen den Objekten ist mindestens eine Relativbewegung entlang einer vertikalen Verschiebungsrichtung z sowie entlang zweier lateraler Verschiebungsrichtungen x, y vorgesehen. Die beiden lateralen Verschiebungsrichtungen x, y sind senkrecht zueinander orientiert; senkrecht bezüglich der beiden lateralen Verschiebungsrichtungen x, y ist die vertikale Verschiebungsrichtung z orientiert. Bei den mit der Abtasteinheit 20 und der Reflexions-Maßverkörperung 10 verbundenen Objekten kann es sich beispielsweise um zueinander bewegliche Maschinenteile handeln. Deren Relativpositionierung erfolgt über eine Folgeelektronik auf Basis der erzeugten Abtastsignale der erfindungsgemäßen optischen Positionsmesseinrichtung.

Im dargestellten Ausführungsbeispiel umfasst die Abtasteinheit 20 eine Lichtquelle 21 sowie eine Glasplatte 23 mit verschiedenen optisch wirksamen Elementen und Detektoren 26.1 - 26.4, die auf der Ober- und Unterseite der Glasplatte 23 angeordnet sind. Die nachfolgend als Oberseite der Glasplatte 23 bezeichnete Seite ist dem von der Lichtquelle 21 her einfallenden Strahlenbündel zugewandt, die Unterseite der Glasplatte 23 der Reflexions-Maßverkörperung 10. Im Verlauf der weiteren nachfolgenden Beschreibung des Abtaststrahlengangs werden die Funktionen der einzelnen Komponenten in der Abtasteinheit 20 noch näher erläutert.

Die Reflexions-Maßverkörperung 10 ist im vorliegenden Beispiel als zweidimensionales Reflexions-Kreuzgitter ausgebildet; eine Draufsicht auf das selbige ist in Figur 2 dargestellt. Generell ist in der erfindungsgemäßen optischen Positionsmesseinrichtung als Reflexions-Maßverkörperung 10 eine zweidimensionale Beugungsstruktur in Form eines Amplituden- oder Phasengitters vorgesehen, die in Kreuzlinien- oder Schachbrettanordnung ausgebildet ist. Die zweidimensionale Beugungsstruktur besteht dabei aus einer Überlagerung einer eindimensionalen Maßverkörperung in der ersten lateralen Verschiebungsrichtung x und einer eindimensionalen Maßverkörperung in der hierzu senkrechten zweiten lateralen Verschiebungsrichtung y. In einer möglichen Ausführungsform besitzt das Reflexions-Kreuzgitter in den beiden Richtungen x, y die gleiche Teilungsperiode TP_{M}; in einem konkreten Ausführungsbeispiel wird TP_{M} = 1.45µm gewählt.

Mit Hilfe der erfindungsgemäßen optischen Positionsmesseinrichtung sind relative Positionsinformationen bzgl. der Relativposition der Reflexions-Maßverkörperung 10 und der Abtasteinheit 20 entlang der zwei lateralen Verschiebungsrichtungen x, y und der vertikalen Verschiebungsrichtung z aus der interferierenden Überlagerung mindestens zweier Paare von Teilstrahlenbündeln erzeugbar. Jegliche Veränderung der Relativposition von Reflexions-Maßverkörperung 10 und Abtasteinheit 20 hat zur Folge, dass in den interferierenden Teilstrahlenbündeln Phasenunterschiede resultieren, die dann phasenverschobene, periodisch modulierte Abtastsignale erzeugen. Die Erfassung der Abtastsignale erfolgt über mehrere Detektoren 26.1 - 26.4.

Nachfolgend werden nunmehr der konkrete Abtaststrahlengang des dargestellten Ausführungsbeispiels der erfindungsgemäßen optischen Positionsmesseinrichtung sowie weitere Details der selbigen erläutert.

Ein von einer Lichtquelle 21, z.B. einer Laserdiode mit einer Wellenlänge von 780nm, emittiertes Strahlenbündel fällt in der Abtasteinheit 20 kollimiert und senkrecht auf ein erstes Aufspaltelement 22 ein, das auf der Oberseite der transparenten Glasplatte 23 angeordnet ist. Zur Kollimation kann z.B. eine geeignete Kollimatorlinse zwischen Lichtquelle 21 und erstem Aufspaltelement 22 vorgesehen werden, die in den Figuren jedoch nicht dargestellt ist. Über das erste Aufspaltelement 22 erfährt - wie in Figur 1a gezeigt - das von der Lichtquelle 21 her einfallende Strahlenbündel in einer ersten Aufspaltebene xz eine Aufspaltung in ein erstes Teilstrahlenbündel 30.1, ein zweites Teilstrahlenbündel 30.2 und ein drittes Teilstrahlenbündel 30.3. Die erste Aufspaltebene xz fällt mit der Zeichenebene in Figur 1a zusammen und wird aufgespannt durch die erste laterale Verschiebungsrichtung x und die vertikale Verschiebungsrichtung z.

Das erste Aufspaltelement 22 ist vorliegend als Transmissions-Kreuzgitter ausgebildet, wie dies aus Figur 3b ersichtlich ist. In einer möglichen Ausführungsform besitzt das Transmissions-Kreuzgitter in den beiden Erstreckungsrichtungen x, y die gleiche Teilungsperiode TP_{A1} und wird etwa gemäß TP_{A1} = 1.38µm gewählt.

Generell ist in der erfindungsgemäßen optischen Positionsmesseinrichtung vorgesehen, das erste Aufspaltelement 22 als zweidimensionale Beugungsstruktur in Kreuzlinien- oder Schachbrettanordnung auszubilden; hierbei kann als entsprechende Beugungsstruktur sowohl ein Amplitudengitter oder auch ein Phasengitter vorgesehen sein.

Das erste Teilstrahlenbündel 30.1 stellt im vorliegenden Ausführungsbeispiel die am Transmissions-Kreuzgitter in der ersten Aufspaltebene xz resultierende -1. Beugungsordnung dar, das zweite Teilstrahlenbündel 30.2 die 0. Beugungsordnung und das dritte Teilstrahlenbündel 30.3 die +1. Beugungsordnung.

Das erste und dritte Teilstrahlenbündel 30.1, 30.3 gelangen nach dem Durchlaufen der Glasplatte 23 auf die Umlenkelemente 25.1, 25.2, die auf der Unterseite der Glasplatte 23 angeordnet sind. Über die Umlenkelemente 25.1, 25.2 erfahren das erste und dritte Teilstrahlenbündel 30.1, 30.3 dabei in der ersten Aufspaltebene xz eine Umlenkung in Richtung der Reflexions-Maßverkörperung 10. Die Umlenkung erfolgt hierbei derart, dass die beiden Teilstrahlenbündel 30.1, 30.3 anschließend senkrecht und kollimiert auf die Reflexions-Maßverkörperung 10 auftreffen.

Wie aus Figur 3a ersichtlich, bestehen die Umlenkelemente 25.1, 25.2 aus Transmissions-Lineargittern, die entlang der ersten lateralen Verschiebungsrichtung x periodisch angeordnete Gitter-Elemente aufweisen, wobei die Gitter-Elemente die Phasenstege eines Phasengitters mit unterdrückter 0. Beugungsordnung darstellen. Die Längsrichtung der Phasenstege erstreckt sich entlang der zweiten lateralen Verschiebungsrichtung y. In einer möglichen Ausführungsform werden die Teilungsperioden TP_{U1}, TP_{U2} der beiden Umlenkelemente 25.1, 25.2 identisch und gemäß TP_{U1} = TP_{U2} = 1.38µm gewählt.

Das am ersten Aufspaltelement 22 resultierende zweite Teilstrahlenbündel 30.2 durchläuft ebenfalls die Glasplatte 23 und trifft auf ein an der Unterseite der Glasplatte 23 angeordnetes zweites Aufspaltelement 24. Über das zweite Aufspaltelement 24 erfährt das zweite Teilstrahlenbündel 30.2 in der ersten Aufspaltebene xz eine Aufspaltung in ein viertes Teilstrahlenbündel 30.4 und ein fünftes Teilstrahlenbündel 30.5. Diese Teilstrahlenbündel 30.4, 30.5 propagieren dann jeweils kollimiert in Richtung der Reflexions-Maßverkörperung 10.

Die Beaufschlagung der Reflexions-Maßverkörperung 10 mittels kollimierter Teilstrahlenbündel 30.1, 30.3, 30.4, 30.5 gewährleistet, dass ein relativ großes Abtast-Feld auf der Reflexions-Maßverkörperung 10 abgetastet wird.

Dadurch wird eine Signalbeeinflussung durch eventuelle Fehler in der Gitterstruktur der Reflexions-Maßverkörperung 10 oder aber durch mögliche Verschmutzungen der Reflexions-Maßverkörperung 10 deutlich verringert. Typische Querschnitte der Teilstrahlenbündel, die kollimiert auf die Reflexions-Maßverkörperung 10 einfallen, liegen bei den angegebenen System-Parametern eines Ausführungsbeispiels der erfindungsgemäßen optischen Positionsmesseinrichtung in der Größenordnung von 0.5mm.

Auch das zweite Aufspaltelement 24 an der Unterseite der Glasplatte 23 ist als Transmissions-Kreuzgitter ausgebildet, wie dies aus Figur 3a ersichtlich ist. Generell ist in der erfindungsgemäßen optischen Positionsmesseinrichtung auch in Bezug auf das zweite Aufspaltelement 24 vorgesehen, dieses als zweidimensionale Beugungsstruktur in Kreuzlinienoder Schachbrettanordnung auszubilden. Hierbei kann als entsprechende Beugungsstruktur wiederum sowohl ein Amplitudengitter oder ein Phasengitter vorgesehen sein. In einer möglichen Ausführungsform besitzt das Transmissions-Kreuzgitter des zweiten Aufspaltelements 24 in den beiden Erstreckungsrichtungen x, y die gleiche Teilungsperiode TP_{A2} und wird gemäß TP_{A2} = 1.45µm gewählt.

Das vierte Teilstrahlenbündel 30.4 stellt vorliegend die am Transmissions-Kreuzgitter des zweiten Aufspaltelements 24 in der ersten Aufspaltebene xz resultierende -1. Beugungsordnung dar, das fünfte Teilstrahlenbündel 30.5 die +1. Beugungsordnung.

Nach dem Durchlaufen der Glasplatte 23 propagieren somit das erste und vierte Teilstrahlenbündel 30.1, 30.4 in Richtung eines ersten Auftreffortes A1 auf der Reflexions-Maßverkörperung 10 und das dritte und fünfte Teilstrahlenbündel 30.3, 30.5 in Richtung eines zweiten Auftreffortes A2 auf der Reflexions-Maßverkörperung 10. Wie aus Figur 1a ersichtlich, sind die beiden Auftrefforte A1, A2 entlang der ersten Verschiebungsrichtung x beabstandet zueinander. Von den beiden Auftrefforten A1, A2 auf der Reflexions-Maßverkörperung 10 werden die beiden Paare der einfallenden Teilstrahlenbündel 30.1, 30.4 bzw. 30.3, 30.5 gebeugt und wieder in Richtung der Abtasteinheit 20 bzw. der Glasplatte 23 zurückreflektiert. Im ersten Paar interferierender Teilstrahlenbündel (links in Figur 1a) wird hierbei vom vierten Teilstrahlenbündel 30.4 die an der Reflexions-Maßverkörperung 10 resultierende reflektierte 0. Beugungsordnung zur Signalerzeugung verwendet, vom ersten Teilstrahlenbündel 30.1 die in -1. Ordnung an der Reflexions-Maßverkörperung 10 resultierende, reflektierte Beugungsordnung. Auf Seiten des zweiten Paars interferierender Teilstrahlenbündel (rechts in Figur 1a) wird vom fünften Teilstrahlenbündel 30.5 ebenfalls die an der Reflexions-Maßverkörperung 10 resultierende reflektierte 0. Beugungsordnung zur Signalerzeugung verwendet, vom dritten Teilstrahlenbündel 30.3 die in +1. Ordnung an der Reflexions-Maßverkörperung 10 resultierende reflektierte Beugungsordnung. Die Teilstrahlenbündel-Paare 30.1/30.4 bzw. 30.3/30.5 durchlaufen dann erneut die Glasplatte 23 und kommen auf den beiden Detektoren 26.1, 26.2 zur interferierenden Überlagerung. Die zwei Detektoren 26.1, 26.2 sind wie das erste Aufspaltelement 22 auf der Oberseite der Glasplatte 23 angeordnet. Dabei kommen auf dem ersten Detektor 26.1 die Teilstrahlenbündel 30.1, 30.4 aus dem ersten Paar interferierender Teilstrahlenbündel zur Überlagerung, die aus einer 0. und -1. Beugungsordnung auf der Reflexions-Maßverkörperung 10 resultieren. Auf dem zweiten Detektor 26.2 kommen die Teilstrahlenbündel 30.3, 30.5 aus dem zweiten Paar interferierender Teilstrahlenbündel zur Überlagerung, die aus einer 0. und +1. Beugungsordnung an der Reflexions-Maßverkörperung 10 resultieren. Das erste Paar überlagerter Teilstrahlenbündel 30.1, 30.4 sei nachfolgend auch als erstes Signalstrahlenbündel A bezeichnet, das zweite Paar überlagerter Teilstrahlenbündel 30.3, 30.5 als zweites Signalstrahlenbündel B.

Über die Detektoren 26.1, 26.2 sind verschiebungsabhängige erste und zweite Abtastsignale erfassbar, aus denen Positionsinformationen bezüglich einer vertikalen Verschiebungsrichtung z und der ersten lateralen Verschiebungsrichtung x der Objekte ableitbar sind; die erste laterale Verschiebungsrichtung x verläuft hierbei in der ersten Aufspaltebene xz oder parallel hierzu.

Im dargestellten Ausführungsbeispiel ist eine sog. Vernier-Auswertung zur Erzeugung einer Mehrzahl phasenverschobener Teil-Abtastsignale innerhalb der ersten und zweiten Abtastsignale vorgesehen, die nachfolgend erläutert sei. Dies ist jedoch nicht wesentlich für die vorliegende Erfindung, d.h. es können grundsätzlich auch alternative Methoden zur Erzeugung phasenverschobener Teil-Abtastsignale genutzt werden; hierauf wird im weiteren Verlauf der Beschreibung noch eingegangen.

Im Fall der hier genutzten Vernier-Auswertung wird über die sich geringfügig, nämlich etwa 0.35%, unterscheidenden Teilungsperioden TP_{A2} = 1.45µm des zweiten Aufspaltelements 24 und der Teilungsperiode TP_{M} = 1.455µm der Reflexions-Maßverkörperung 10 sichergestellt, dass die in jedem Signalstrahlenbündel A, B enthaltenen Teilstrahlenbündel 30.1, 30.4 bzw. 30.3, 30.5 unter geringfügig unterschiedlichen Winkeln von den Auftrefforten A1, A2 auf der Reflexions-Maßverkörperung 10 in Richtung der Detektoren 26.1, 26.2 propagieren. Im Fall der vorgenannten Parameter für das zweite Aufspaltelement 24 und die Reflexions-Maßverkörperung 10 ergibt sich etwa ein Winkel von ca. 2mrad zwischen den entsprechenden Teilstrahlenbündeln 30.1, 30.4 bzw. 30.3, 30.5 innerhalb eines Signalstrahlenbündels A, B. In der Detektionsebene der Detektoren 26.1, 26.2 resultiert dann ein periodisches (Vernier-) Streifenmuster mit einer Periodizität TP_{SM} = 400µm.

Zur Erfassung des periodischen Streifenmusters sind die Detektoren 26.1, 26.2 im vorliegenden Ausführungsbeispiel als strukturierte Photodetektoren auf der Oberseite der Glasplatte 23 ausgebildet. Diese bestehen - wie in Figur 4 dargestellt - aus einer Mehrzahl von Detektorelementen 26.1₁, 26.1₂.... 26.1ₙ bzw. 26.2₁, 26.2₂.... 26.2ₙ und sind periodisch entlang der ersten Verschiebungsrichtung x angeordnet, wobei phasengleiche Detektorelemente 26.1₁, 26.1₂.... 26.1ₙ bzw. 26.2₁, 26.2₂.... 26.2ₙ, elektrisch miteinander verbunden sind. Die lichtempfindlichen Flächen der Detektorelemente 26.1₁, 26.1₂.... 26.1ₙ bzw. 26.2₁, 26.2₂.... 26.2ₙ sind jeweils in Richtung der Reflexions-Maßverkörperung 10 orientiert. Im vorliegenden Ausführungsbeispiel sind die strukturierten Photodetektoren aus α-Silizium ausgebildet und direkt strukturiert auf der Glasplatte 23 angeordnet. Pro Streifenmusterperiode sind vorliegend vier Detektorelemente 26.1₁ - 26.1₄ bzw. 26.2₁ - 26.2₄ angeordnet. Dieser Sachverhalt ist schematisiert in Figur 4 dargestellt. Über die Detektorelemente 26.1₁ - 26.1₄ bzw. 26.2₁ - 26.2₄ werden dann pro Streifenmusterperiode jeweils vier Teil-Abtastsignale mit den in Figur 4 angedeuteten Phasenlagen erzeugt, d.h. vier um 90° phasenversetzte Teil-Abtastsignale. Pro Detektor 26.1, 26.2 werden durch die Antiparallelschaltung von je zwei gegenphasigen Teil-Abtastsignalen jeweils zwei offsetfreie, um 90° phasenversetzte Abtastsignale S1₀, S1₉₀ bzw. S2₀, S2₉₀ erzeugt, die anschließend gemäß der Darstellung in Figur 5 weiterverarbeitet werden. In dieser Figur ist die Bildung der Positionswerte aus den Abtastsignalen S1₀, S1₉₀ bzw. S2₀, S2₉₀ symbolisch dargestellt. Diese Positionswerte hängen sowohl von einer lateralen Verschiebung als auch von einer vertikalen Verschiebung der Objekte zueinander ab. Die elektronische Weiterverarbeitung zu Positionswerten POSₓ, POS_{z}, die eindeutig ausschließlich einer der beiden Verschiebebewegungen (lateral, vertikal) zugeordnet werden können, basiert auf einer Differenz- sowie Summenbildung der aus den Abtastsignalen S1₀, S1₉₀ bzw. S2₀, S2₉₀ gewonnenen Phasenwerte Φ₁ und Φ₂, wie in Figur 5 dargestellt.

In der erfindungsgemäßen optischen Positionsmesseinrichtung kann durch die Wahl geeigneter Dimensionierungsparameter sichergestellt werden, dass die optischen Weglängen aller Teilstrahlenbündel, die in den Detektionsebenen der Detektoren 26.1, 26.2 zur interferierenden Überlagerung gebracht werden, zwischen dem ersten Aufspaltelement 22 und dem ersten bzw. zweiten Auftreffort A1, A2 auf der Reflexions-Maßverkörperung 10 im Nenn-Abtastabstand D gleich sind. Als Nenn-Abtastabstand D zwischen der Reflexions-Maßverkörperung 10 und der Glasplatte 23 sei dabei derjenige Abstand bezeichnet, in dem sich das erste und vierte Teilstrahlenbündel 30.1, 30.4 am ersten Auftreffort A1 und das dritte und fünfte Teilstrahlenbündel 30.3, 30.5 am zweiten Auftreffort A2 auf der Reflexions-Maßverkörperung 10 ohne lateralen Versatz überlagern. Hierzu werden die Teilungsperioden TP_{A1}, TP_{A2}, TP_{U1}, TP_{U2} der Aufspaltelemente 22, 24 und der Umlenkelemente 25.1, 25.2 sowie die Dicke d der Glasplatte 23 und der Nenn-Abtastabstand D geeignet aufeinander abgestimmt. Auf diese Art und Weise kann im Nenn-Abtastabstand D gewährleistet werden, dass die Positionsbestimmung wellenlängen-unabhängig erfolgt. Eventuelle Schwankungen der Umgebungsbedingungen und damit der Wellenlänge beeinflussen die Positionsbestimmung nicht.

In einem Ausführungsbeispiel resultiert mit den vorstehend erwähnten Teilungsperioden der verschiedenen Gitter sowie einer Dicke d der Glasplatte 23 gemäß d = 2.5mm und einem Nenn-Abtastabstand D = 1.56mm eine im Nenn-Abtastabstand D weglängenkompensierte Positionsmesseinrichtung mit einer Signalperiode SPₓ der Abtastsignale für die Bewegung entlang der ersten lateralen Verschiebungsrichtung x von SPₓ = 1.455µm und einer Signalperiode SP_{z} der Abtastsignale für die Bewegung entlang der vertikalen Verschiebungsrichtung z von SP_{z} = 5µm

Mit Hilfe der erfindungsgemäßen Positionsmesseinrichtung lässt sich nunmehr nicht nur eine Relativbewegung von Abtasteinheit 20 und Reflexions-Maßverkörperung 10 entlang der ersten lateralen Verschiebungsrichtung x und entlang der vertikalen Verschiebungsrichtung z messtechnisch erfassen, es ist darüber hinaus auch die Erfassung von Verschiebebewegungen entlang der zweiten lateralen Verschiebungsrichtung y möglich.

Hierzu ist vorgesehen, dass das von der Lichtquelle 21 her einfallende Strahlenbündel in der Abtasteinheit 20 über das erste Aufspaltelement 22 ferner eine Aufspaltung in weitere Teilstrahlenbündel 30.6, 30.7, 30.8, 30.9, 30.10 in einer zweiten Aufspaltebene yz erfährt, die senkrecht zur ersten Aufspaltebene xz orientiert ist. Der nach dem ersten Aufspaltelement 22 resultierende Abtaststrahlengang in der zweiten Aufspaltebene yz entspricht grundsätzlich dem Abtaststrahlengang in der ersten Aufspaltebene xz, ist jedoch um 90° entlang der Verschiebungsrichtung z verdreht gegenüber diesem. In Figur 1 b ist der entsprechende Abtaststrahlengang in der zweiten Aufspaltebene im Detail dargestellt. Demzufolge propagieren die verschiedenen Teilstrahlenbündel 30.6, 30.7, 30.8, 30.9, 30.10 in der zweiten Aufspaltebene yz analog zu den verschiedenen Teilstrahlenbündeln 30.1, 30.2, 30.3, 30.4, 30.5 in der ersten Aufspaltebene xz. Über dritte und vierte Detektoren 26.3, 26.4 sind in diesem Abtaststrahlengang verschiebungsabhängige dritte und vierte Abtastsignale erfassbar, aus denen Positionsinformationen bezüglich der vertikalen Verschiebungsrichtung z und der zweiten lateralen Verschiebungsrichtung y der Objekte ableitbar sind; die zweite laterale Verschiebungsrichtung y verläuft hierbei in der zweiten Aufspaltebene yz oder parallel hierzu.

Wie in Figur 1 b dargestellt, erfolgt über das erste Aufspaltelement 22 neben der Aufspaltung in der ersten Aufspaltebene xz (Figur 1a) ferner in der zweiten Aufspaltebene eine Aufspaltung des einfallenden Strahlenbündels in ein sechstes Teilstrahlenbündel 30.6, ein siebtes Teilstrahlenbündel 30.7 und ein achtes Teilstrahlenbündel 30.8. Das sechste Teilstrahlenbündel 30.6 und das achte Teilstrahlenbündel 30.8 werden über weitere Umlenkelemente 25.3, 25.4 in der Abtasteinheit 20 in Richtung der Reflexions-Maßverkörperung 10 umgelenkt. Das siebte Teilstrahlenbündel 30.7 erfährt über das zweite Aufspaltelement 24 eine Aufspaltung in ein neuntes Teilstrahlenbündel 30.9 und ein zehntes Teilstrahlenbündel 30.10. Nach dem Durchlaufen der Glasplatte 23 propagieren schließlich das sechste und neunte Teilstrahlenbündel 30.6, 30.9 in Richtung eines dritten Auftreffortes A3 auf der Reflexions-Maßverkörperung 10, das achte und zehnte Teilstrahlenbündel 30.8, 30.10 in Richtung eines vierten Auftreffortes A4. Der dritte und vierte Auftreffort A3, A4 sind entlang der zweiten lateralen Verschiebungsrichtung y beabstandet zueinander. Nach der Reflexion an der Reflexions-Maßverkörperung propagieren schließlich die überlagerten Paare von Teilstrahlenbündeln 30.6/30.9 bzw. 30.8/30.10 als Signalstrahlenbündel C, D in Richtung der dritten und vierten Detektoren 26.3, 26.4. Dort gelangen die Teilstrahlenbündel 30.6, 30.9; 30.8, 30.10 in den beiden Paaren jeweils zur interferierenden Überlagerung, so dass über die dritten und vierten Detektoren 26.3, 26.4 die verschiebungsabhängigen dritten und vierten Abtastsignale erfassbar sind.

Im Hinblick auf die Ausgestaltung der verschiedenen Komponenten im Abtaststrahlengang der zweiten Aufspaltebene yz sowie in Bezug auf eine geeignete Signalauswertung sei auf die obigen Ausführungen zum Abtaststrahlengang in der ersten Aufspaltebene xz verwiesen. Die Umlenkelemente 25.3, 25.4 aus dem zuletzt beschriebenen Abtaststrahlengang sind ebenso wie die Detektoren 26.3, 26.4 natürlich um 90° verdreht gegenüber den entsprechenden Elementen aus dem eingangs erläuterten Abtaststrahlengang ausgebildet bzw. orientiert angeordnet.

Die resultierenden Abtastsignale bezüglich einer Bewegung entlang der zweiten lateralen Verschiebungsrichtung y besitzen in einem Ausführungsbeispiel mit den vorstehend genannten Parametern die gleiche Signalperiode SPy wie die Abtastsignale bezüglich der ersten lateralen Verschiebungsrichtung x, d.h. SPy = SPₓ = 1.455µm.

Neben dem konkret beschriebenen Ausführungsbeispiel existieren im Rahmen der vorliegenden Erfindung selbstverständlich noch weitere Ausgestaltungsmöglichkeiten für die erfindungsgemäß optische Positionsmesseinrichtung.

Wie bereits oben angedeutet, ist zur Erzeugung mehrerer phasenverschobener Teil-Abtastsignale die Nutzung der erläuterten Vernier-Auswertung nicht zwingend erforderlich. Beispielsweise wäre in der erfindungsgemäßen Positionsmesseinrichtung auch eine sog. polarisationscodierte Erzeugung derartiger Signale möglich. In diesem Fall sind beispielsweise das zweite Aufspaltelement sowie die Umlenkelemente als Zirkularpolarisatoren in 1. Beugungsordnung auszubilden. Dadurch kommen Teilstrahlenbündel zur Interferenz, die links- und rechtszirkular polarisiert sind. Im Unterschied zur oben erläuterten Vernier-Auswertung besitzen die von den Auftrefforten auf der Reflexions-Maßverkörperung zurückreflektierten Teilstrahlenbündel, die die in Richtung der Abtasteinheit propagierenden Signalstrahlenbündel darstellen, gleiche Ausbreitungsrichtungen. Anstelle der Detektoren ist auf der Oberseite der Glasplatte dann jeweils ein weiteres Aufspaltelement in Form eines linearen Transmissions-Phasengitters angeordnet, über die eine Aufspaltung der einfallenden Signalstrahlenbündel in je drei Teil-Signalstrahlenbündel erfolgt. Diese Teil-Signalstrahlenbündel werden anschließend einer polarisationsoptischen Detektionseinheit zugeführt, die u.a. auch die Detektoren umfasst und in einer leicht abgewandelten Form beispielsweise aus Figur 1 der DE 10 2011 005 937 A1 der Anmelderin bekannt ist und auf die vorliegend ausdrücklich Bezug genommen wird. In den Detektionseinheiten der vorliegenden Anwendung kann hierbei die Lambda/4- Platte sowie das Aufspaltgitter der Detektionseinheit aus der DE 10 2011 005 937 A1 entfallen, da in den Signalstrahlenbündeln bereits die für die Auswertung erforderlichen links- und rechtszirkular polarisierten Teilstrahlenbündel vorliegen.

Alternativ hierzu existieren natürlich noch weitere Möglichkeiten zur geeigneten Platzierung polarisationsoptischer Bauelemente in den Strahlengängen.

Ferner ist es möglich, die erforderliche Lichtquelle nicht in der Abtasteinheit anzuordnen, wie dies im erläuterten Ausführungsbeispiel vorgesehen ist. Es ist grundsätzlich auch möglich, die Lichtquelle entfernt von der Abtasteinheit anzuordnen und das emittierte Lichtbündel mittels eines Lichtwellenleiters der Abtasteinheit bzw. dem ersten Aufspaltelement zuzuführen.

Schließlich könnte das erläuterte Ausführungsbeispiel noch um zusätzliche Fokussierelemente ergänzt werden, die zwischen Lichtquelle und Reflexions-Maßverkörperung angeordnet sind und zur Fokussierung der Teilstrahlenbündel auf die Reflexions-Maßverkörperung dienen etc..

## Patentansprüche

1. Optische Positionsmesseinrichtung zur Erfassung der Relativposition von zwei zueinander beweglichen Objekten, bestehend aus einer Abtasteinheit, die mit einem der Objekte verbunden ist und einer Reflexions-Maßverkörperung, die mit dem anderen der beiden Objekte verbunden ist, wobei relative Positionsinformationen aus der interferierenden Überlagerung mindestens zweier Paare von Teilstrahlenbündeln resultieren, wozu
- ein von einer Lichtquelle her einfallendes Strahlenbündel in der Abtasteinheit über ein erstes Aufspaltelement eine Aufspaltung in mindestens ein erstes, zweites und drittes Teilstrahlenbündel in einer ersten Aufspaltebene erfährt und
- das erste und dritte Teilstrahlenbündel über Umlenkelemente in der Abtasteinheit eine Umlenkung in Richtung der Reflexions-Maßverkörperung erfahren, während das zweite Teilstrahlenbündel über ein zweites Aufspaltelement eine Aufspaltung in mindestens ein viertes und fünftes Teilstrahlenbündel erfährt, wobei das erste und vierte Teilstrahlenbündel in Richtung eines ersten Auftreffortes und das dritte und fünfte Teilstrahlenbündel in Richtung eines zweites Auftreffortes auf der Reflexions-Maßverkörperung propagiert,
- und das überlagerte erste und zweite Paar von Teilstrahlenbündeln nach der Reflexion an der Reflexions-Maßverkörperung in Richtung eines ersten und eines zweiten Detektors propagiert, wo die Teilstrahlenbündel in jedem Paar zur interferierenden Überlagerung gelangen, so dass über die Detektoren verschiebungsabhängige erste und zweite Abtastsignale erfassbar sind, aus denen Positionsinformationen bezüglich einer vertikalen und einer ersten lateralen Verschiebungsrichtung der Objekte ableitbar sind, wobei die erste laterale Verschiebungsrichtung in der ersten Aufspaltebene oder parallel hierzu verläuft,
**dadurch gekennzeichnet,**
**dass** das einfallende Strahlenbündel in der Abtasteinheit (20) über das erste Aufspaltelement (22) ferner eine Aufspaltung in weitere Teilstrahlenbündel (30.6, 30.7, 30.8, 30.9, 30.10) in einer zweiten Aufspaltebene (yz) erfährt, die senkrecht zur ersten Aufspaltebene (xz) orientiert ist und die Teilstrahlenbündel (30.6, 30.7, 30.8, 30.9, 30.10) in der zweiten Aufspaltebene (yz) analog zu den Teilstrahlenbündeln (30.1, 30.2, 30.3, 30.4, 30.5) in der ersten Aufspaltebene (xz) propagieren, so dass über dritte und vierte Detektoren (26.3, 26.4) verschiebungsabhängige dritte und vierte Abtastsignale erfassbar sind, aus denen Positionsinformationen bezüglich der vertikalen Verschiebungsrichtung (z) und einer zweiten lateralen Verschiebungsrichtung (y) der Objekte ableitbar sind, wobei die zweite laterale Verschiebungsrichtung (y) in der zweiten Aufspaltebene (yz) oder parallel hierzu verläuft.

2. Optische Positionsmesseinrichtung nach Anspruch 1, **dadurch gekennzeichnet, dass** über das erste Aufspaltelement (22) ferner eine Aufspaltung in mindestens ein sechstes, siebtes und achtes Teilstrahlenbündel (30.6, 30.7, 30.8) erfolgt und
- das sechste und achte Teilstrahlenbündel (30.6, 30.8) über weitere Umlenkelemente (25.3, 25.4) in der Abtasteinheit (20) eine Umlenkung in Richtung der Reflexions-Maßverkörperung (10) erfahren, während das siebte Teilstrahlenbündel (30.7) über das zweite Aufspaltelement (24) eine Aufspaltung in mindestens ein neuntes und zehntes Teilstrahlenbündel (30.9, 30.10) erfährt, wobei das sechste und neunte Teilstrahlenbündel (30.6, 30.9) in Richtung eines dritten Auftreffortes (A3) und das achte und zehnte Teilstrahlenbündel (30.8, 30.10) in Richtung eines vierten Auftreffortes (A4) auf der Reflexions-Maßverkörperung (10) propagieren,
- und die überlagerten dritten und vierten Paare von Teilstrahlenbündeln (30.6, 30.9; 30.8, 30.10) nach der Reflexion an der Reflexions-Maßverkörperung (10) in Richtung der dritten und vierten Detektoren (26.3, 26.4) propagieren, wo die zwei Paare von Teilstrahlenbündeln (30.6, 30.9; 30.8, 30.10) jeweils zur interferierenden Überlagerung gelangen, so dass über die dritten und vierten Detektoren (26.3, 26.4) die verschiebungsabhängigen dritten und vierten Abtastsignale erfassbar sind.

3. Optische Positionsmesseinrichtung nach Anspruch 1, **dadurch gekennzeichnet, dass** das erste Aufspaltelement (22) und das zweite Aufspaltelement (24) jeweils als zweidimensionale Beugungsstruktur in Kreuzlinien- oder Schachbrettanordnung ausgebildet ist.

4. Optische Positionsmesseinrichtung nach Anspruch 3, **dadurch gekennzeichnet, dass** die zweidimensionale Beugungsstruktur als Amplitudengitter oder als Phasengitter ausgebildet ist.

5. Optische Positionsmesseinrichtung nach Anspruch 3 oder 4, **dadurch gekennzeichnet, dass** das erste Aufspaltelement (22) und das zweite Aufspaltelement (24) jeweils als zweidimensionales Transmissions-Kreuzgitter ausgebildet sind.

6. Optische Positionsmesseinrichtung nach Anspruch 3, **dadurch gekennzeichnet, dass** die beiden Aufspaltebenen (xz, yz) senkrecht zueinander orientiert sind.

7. Optische Positionsmesseinrichtung nach mindestens einem der vorangehenden Ansprüche, **dadurch gekennzeichnet, dass** die Reflexions-Maßverkörperung (10) als zweidimensionale Beugungsstruktur in Kreuzlinien- oder Schachbrettanordnung ausgebildet ist.

8. Optische Positionsmesseinrichtung nach Anspruch 7, **dadurch gekennzeichnet, dass** die zweidimensionale Beugungsstruktur als Amplitudengitter oder als Phasengitter ausgebildet ist.

9. Optische Positionsmesseinrichtung nach Anspruch 7 oder 8, **dadurch gekennzeichnet, dass** die Reflexions-Maßverkörperung (10) als zweidimensionales Reflexions-Kreuzgitter ausgebildet ist.

10. Optische Positionsmesseinrichtung nach mindestens einem der vorangehenden Ansprüche, **dadurch gekennzeichnet, dass** die Abtasteinheit (20) eine transparente Glasplatte (23) umfasst,
- auf deren, dem einfallenden Lichtbündel zugewandten Seite, das erste Aufspaltelement (22) angeordnet ist und
- auf deren, der Reflexions-Maßverkörperung (10) zugewandten Seite das zweite Aufspaltelement (24) sowie die Umlenkelemente (25.1 - 25.4) angeordnet sind.

11. Optische Positionsmesseinrichtung nach Anspruch 10, **dadurch gekennzeichnet, dass** auf der Seite der Glasplatte (23), die dem einfallenden Lichtbündel zugewandt ist, ferner die vier Detektoren (26.1 - 26.4) angeordnet sind, welche jeweils als strukturierte Photodetektoren ausgebildet sind, deren lichtempfindliche Flächen in Richtung der gegenüberliegenden Seite der Glasplatte (23) orientiert sind.

12. Optische Positionsmesseinrichtung nach Anspruch 11, **dadurch gekennzeichnet, dass** die strukturierten Photodetektoren jeweils eine Mehrzahl von periodisch angeordneten Detektorelementen (26.1₁ - 26.1ₙ, 26.2₁ - 26.2ₙ, 26.3₁ - 26.3ₙ, 26.4₁ - 26.4ₙ,) aufweisen, wobei phasengleiche Detektorelemente (26.1₁ - 26.1ₙ, 26.2₁ - 26.2ₙ, 26.3₁ - 26.3ₙ, 26.4₁ -26.4ₙ,) elektrisch miteinander verbunden sind.

13. Optische Positionsmesseinrichtung nach Anspruch 11, **dadurch gekennzeichnet, dass** die strukturierten Photodetektoren aus α-Silizium ausgebildet und direkt strukturiert auf der Glasplatte (23) angeordnet sind.

14. Optische Positionsmesseinrichtung nach mindestens einem der vorangehenden Ansprüche, **dadurch gekennzeichnet, dass** die Detektoren (26.1 - 26.4) in der gleichen Ebene angeordnet sind wie das erste Aufspaltelement (22).

15. Optische Positionsmesseinrichtung nach mindestens einem der vorangehenden Ansprüche, **dadurch gekennzeichnet, dass** die Umlenkelemente (25.1 - 25.4) als Transmissions-Lineargitter ausgebildet sind.

## Claims

1. Optical position measuring device for capturing the relative position of two objects that are movable with respect to one another, consisting of a scanning unit connected to one of the objects and a reflection standard connected to the other one of the two objects, wherein relative position information results from the interfering superposition of at least two pairs of partial beams, to which end
- a beam that is incident from a light source undergoes splitting in the scanning unit into at least a first, second and third partial beam in a first splitting plane by way of a first splitting element, and
- the first and third partial beams undergo a deflection in the scanning unit in the direction of the reflection standard by way of deflection elements, while the second partial beam undergoes splitting into at least a fourth and fifth partial beam by way of a second splitting element, wherein the first and fourth partial beams propagate in the direction of a first location of incidence, and the third and fifth partial beams propagate in the direction of a second location of incidence on the reflection standard,
- and the superposed first and second pairs of partial beams, after reflection at the reflection standard, propagate in the direction of a first and second detector, where the partial beams in each pair are brought into interfering superposition, with the result that the detectors may be used to capture displacement-dependent first and second scanning signals, from which position information relating to a vertical and a first lateral displacement direction of the objects is derivable, wherein the first lateral displacement direction extends in the first splitting plane or parallel thereto,
**characterized**
**in that** the incident beam furthermore undergoes splitting in the scanning unit (20) by way of the first splitting element (22) into further partial beams (30.6, 30.7, 30.8, 30.9, 30.10) in a second splitting plane (yz), which is oriented perpendicular to the first splitting plane (xz), and the partial beams (30.6, 30.7, 30.8, 30.9, 30.10) in the second splitting plane (yz) propagate similar to the partial beams (30.1, 30.2, 30.3, 30.4, 30.5) in the first splitting plane (xz), with the result that third and fourth detectors (26.3, 26.4) may be used to capture displacement-dependent third and fourth scanning signals, from which position information relating to the vertical displacement direction (z) and a second lateral displacement direction (y) of the objects are derivable, wherein the second lateral displacement direction (y) extends in the second splitting plane (yz) or parallel thereto.

2. Optical position measuring device according to Claim 1, **characterized in that** furthermore splitting into at least a sixth, seventh and eighth partial beam (30.6, 30.7, 30.8) is effected by way of the first splitting element (22) and
- the sixth and eighth partial beams (30.6, 30.8) undergo in the scanning unit (20) a deflection in the direction of the reflection standard (10) by way of further deflection elements (25.3, 25.4), while the seventh partial beam (30.7) undergoes splitting into at least a ninth and tenth partial beam (30.9, 30.10) by way of the second splitting element (24), wherein the sixth and ninth partial beams (30.6, 30.9) propagate in the direction of a third location of incidence (A3) and the eighth and tenth partial beams (30.8, 30.10) propagate in the direction of a fourth location of incidence (A4) on the reflection standard (10),
- and the superposed third and fourth pairs of partial beams (30.6, 30.9; 30.8, 30.10), after the reflection at the reflection standard (10), propagate in the direction of the third and fourth detectors (26.3, 26.4), where the two pairs of partial beams (30.6, 30.9; 30.8, 30.10) are each brought into interfering superposition, with the result that the third and fourth detectors (26.3, 26.4) may be used to capture the displacement-dependent third and fourth scanning signals.

3. Optical position measuring device according to Claim 1, **characterized in that** the first splitting element (22) and the second splitting element (24) are each configured as a two-dimensional diffraction structure in crossed-line or chessboard arrangement.

4. Optical position measuring device according to Claim 3, **characterized in that** the two-dimensional diffraction structure is in the form of an amplitude grating or a phase grating.

5. Optical position measuring device according to Claim 3 or 4, **characterized in that** the first splitting element (22) and the second splitting element (24) are each in the form of two-dimensional crossed transmission gratings.

6. Optical position measuring device according to Claim 3, **characterized in that** the two splitting planes (xz, yz) are oriented perpendicularly to each other.

7. Optical position measuring device according to at least one of the preceding claims, **characterized in that** the reflection standard (10) is configured as a two-dimensional diffraction structure in crossed-line or chessboard arrangement.

8. Optical position measuring device according to Claim 7, **characterized in that** the two-dimensional diffraction structure is in the form of an amplitude grating or a phase grating.

9. Optical position measuring device according to Claim 7 or 8, **characterized in that** the reflection standard (10) is in the form of a two-dimensional crossed reflection grating.

10. Optical position measuring device according to at least one of the preceding claims, **characterized in that** the scanning unit (20) comprises a transparent glass plate (23),
- on the side of which that faces the incident beam the first splitting element (22) is arranged, and
- on the side of which that faces the reflection standard (10) the second splitting element (24) and the deflection elements (25.1 - 25.4) are arranged.

11. Optical position measuring device according to Claim 10, **characterized in that** furthermore arranged on the side of the glass plate (23) that faces the incident beam are the four detectors (26.1 - 26.4) which are each configured as structured photodetectors, the light-sensitive surfaces of which are oriented in the direction of the opposite side of the glass plate (23).

12. Optical position measuring device according to Claim 11, **characterized in that** the structured photodetectors each have a plurality of periodically arranged detector elements (26.1₁ - 26.1ₙ, 26.2₁ - 26.2ₙ, 26.3₁ - 26.3ₙ, 26.4₁ - 26.4ₙ), wherein phase identical detector elements (26.1₁ - 26.1ₙ, 26.2₁ - 26.2ₙ, 26.3₁ - 26.3ₙ, 26.4₁ - 26.4ₙ) are electrically connected to one another.

13. Optical position measuring device according to Claim 11, **characterized in that** the structured photodetectors are made of α-silicon and are arranged in a way in which they are directly structured on the glass plate (23).

14. Optical position measuring device according to at least one of the preceding claims, **characterized in that** the detectors (26.1 - 26.4) are arranged in the same plane as the first splitting element (22).

15. Optical position measuring device according to at least one of the preceding claims, **characterized in that** the deflection elements (25.1 - 25.4) are in the form of linear transmission gratings.

## Revendications

1. Dispositif de mesure optique de position destiné à détecter la position relative de deux objets mobiles l'un par rapport à l'autre, constitué d'une unité de balayage qui est reliée à l'un des objets et d'une mesure matérialisée de réflexion qui est reliée à l'autre des deux objets, dans lequel des informations de position relative résultent de la superposition génératrice d'interférence d'au moins deux paires de faisceaux de rayons partiels,
- un faisceau de rayons incident dans l'unité de balayage en provenance d'une source lumineuse subit une division par l'intermédiaire d'un premier élément de division en au moins un premier, un deuxième et un troisième faisceaux de rayons partiels dans un premier plan de division, et
- les premier et troisième faisceaux de rayons partiels sont soumis à une déviation par l'intermédiaire d'éléments de déviation dans l'unité de balayage dans la direction de la mesure matérialisée de réflexion, pendant que le deuxième faisceau de rayons partiel est soumis à une division par l'intermédiaire d'un deuxième élément de division en au moins un quatrième et un cinquième faisceaux de rayons partiels, dans lequel les premier et quatrième faisceaux de rayons partiels se propagent dans la direction d'un premier emplacement d'incidence et les troisième et cinquième faisceaux de rayons partiels se propagent dans la direction d'un deuxième emplacement d'incidence sur la mesure matérialisée de réflexion,
- et les première et deuxième paires superposées de faisceaux de rayons partiels se propagent après réflexion sur la mesure matérialisée de réflexion dans la direction d'un premier et d'un deuxième détecteurs, où les faisceaux de rayons partiels de chaque paire se superposent en interférant de manière à ce que des premier et deuxième signaux de balayage dépendant du décalage verticale puissent être détectés par l'intermédiaire des détecteurs, signaux à partir desquels il est possible de déduire des informations de position concernant une direction de décalage et une première direction de décalage latérale des objets, dans lequel la première direction de décalage latérale s'étend dans le premier plan de division ou parallèlement à celui-ci,
**caractérisé en ce que** le faisceau de rayons incident dans l'unité de balayage (20) est en outre soumis à une division par l'intermédiaire du premier élément de division (22) en d'autres faisceaux de rayons partiels (30.6, 30.7, 30.8, 30.9, 30.10) dans un deuxième plan de division (yz) qui est orienté perpendiculairement au premier plan de division (xz) et les faisceaux de rayons partiels (30.6, 30.7, 30.8, 30.9, 30.10) se propagent dans le deuxième plan de division (yz) de manière analogue aux faisceaux de rayons partiels (30.1, 30.2, 30.3, 30.4, 30.5) dans le premier plan de division (xz) de manière à ce que des troisième et quatrième signaux de balayage dépendant du décalage puissent être détectés par l'intermédiaire de troisième et quatrième détecteurs (26.3, 26.4), signaux à partir desquels il est possible de déduire des informations de position concernant la direction de décalage verticale (z) et une deuxième direction de décalage latérale (y) des objets, dans lequel la deuxième direction de décalage latérale (y) s'étend dans le deuxième plan de division (yz) ou parallèlement à celui-ci.

2. Dispositif de mesure optique de position selon la revendication 1, **caractérisé en ce qu'**une division en au moins un sixième, un septième et un huitième faisceaux de rayons partiels (30.6, 30.7, 30.8) est en outre effectuée par l'intermédiaire du premier élément de division (22), et
- les sixième et huitième faisceaux de rayons partiels (30.6, 30.8) sont soumis dans l'unité de balayage (20) à une déviation dans 1a direction de la mesure matérialisée de réflexion (10) par l'intermédiaire d'autres éléments de déviation (25.3, 25.4), pendant que le septième faisceau de rayons partiels (30.7) est soumis à une division en au moins un neuvième et un dixième faisceaux de rayons partiels (30.9, 30.10) par l'intermédiaire du deuxième élément de division (24), dans lequel les sixième et neuvième faisceaux de rayons partiels (30.6, 30.9) se propagent dans la direction d'un troisième emplacement d'incidence (A3) et les huitième et dixième faisceaux de rayons partiels (30.8, 30.10) se propagent dans la direction d'un quatrième emplacement d'incidence (A4) sur la mesure matérialisée de réflexion (10),
- et les troisième et quatrième paires superposées de faisceaux de rayons partiels (30.6, 30.9 ; 30.8, 30.10), après réflexion sur la mesure matérialisée de réflexion (10), se propagent dans la direction des troisième et quatrième détecteurs (26.3, 26.4) où les deux paires de faisceaux de rayons partiels (30.6, 30.9 ; 30.8, 30.10) se superposent respectivement en interférant de manière à ce que les troisième et quatrième signaux de balayage dépendant du décalage puissent être détectés par l'intermédiaire des troisième et quatrième détecteurs (26.3, 26.4).

3. Dispositif de mesure optique de position selon la revendication 1, **caractérisé en ce que** le premier élément de division (22) et le deuxième éléments de division (24) sont respectivement réalisés sous la forme de structures de diffraction bidimensionnelles selon un agencement en lignes croisées ou en échiquier.

4. Dispositif de mesure optique de position selon la revendication 3, **caractérisé en ce que** la structure de diffraction bidimensionnelle est réalisée sous la forme d'un réseau de diffraction d'amplitude ou d'une réseau de diffraction de phase.

5. Dispositif de mesure optique de position selon la revendication 3 ou 4, **caractérisé en ce que** le premier élément de division (22) et le deuxième élément de division (24) sont respectivement réalisés sous la forme d'un réseau de diffraction croisé de transmission bidimensionnel.

6. Dispositif de mesure optique de position selon la revendication 3, **caractérisé en ce que** les deux plans de division (xz, yz) sont orientés perpendiculairement l'un à l'autre.

7. Dispositif de mesure optique de position selon au moins l'une des revendications précédentes, **caractérisé en ce que** la mesure matérialisée de réflexion (10) est réalisée sous la forme d'une structure de diffraction bidimensionnelle selon un agencement en lignes croisées ou en échiquier.

8. Dispositif de mesure optique de position selon la revendication 7, **caractérisé en ce que** la structure de diffraction bidimensionnelle est réalisée sous la forme d'un réseau de diffraction d'amplitude ou sous la forme d'un réseau de diffraction de phase.

9. Dispositif de mesure optique de position selon la revendication 7 ou 8, **caractérisé en ce que** la mesure matérialisée de réflexion (10) est réalisée sous la forme d'un réseau de diffraction de réflexion en croix bidimensionnel.

10. Dispositif de mesure optique de position selon au moins l'une des revendications précédentes, **caractérisé en ce que** l'unité de balayage (20) comprend une lame de verre transparente (23),
- sur laquelle est disposé, sur la face tournée vers le faisceau lumineux incident, le premier élément de division (22), et
- sur laquelle sont disposés, sur la face tournée vers la mesure matérialisée de réflexion (10), le deuxième élément de division (24) ainsi que les éléments de déviation (25.1 - 25.4).

11. Dispositif de mesure optique de position selon la revendication 10, **caractérisé en ce que**, sur la face de la lame de verre (23) qui est tournée vers le faisceau lumineux incident, sont en outre disposés les quatre détecteurs (26.1 - 26.4) qui sont respectivement réalisés sous la forme de photodétecteurs structurés, dont les surfaces photosensibles sont orientées dans la direction de la face opposée de la lame de verre (23).

12. Dispositif de mesure optique de position selon la revendication 11, **caractérisé en ce que** les photodétecteurs structurés comportent respectivement une pluralité d'éléments détecteurs disposés périodiquement (26.1₁ - 26.1ₙ, 26.2₁ - 26.2ₙ, 26.3₁ - 26.3ₙ, 26.4₁ - 26.4ₙ), dans lequel des éléments détecteurs en phase (26.1₁ - 26.1ₙ, 26.2₁ - 26.2ₙ, 26.3₁ - 26.3ₙ, 26.4₁ - 26.4ₙ) sont électriquement reliés les uns aux autres.

13. Dispositif de mesure optique de position selon la revendication 11, **caractérisé en ce que** les photodétecteurs structurés sont constitués de silicium α et sont disposés de manière directement structurée sur la lame de verre (23).

14. Dispositif de mesure optique de position selon au moins l'une des revendications précédentes, **caractérisé en ce que** les détecteurs (26.1 - 26.4) sont disposés dans le même plan que le premier élément de division (22).

15. Dispositif de mesure optique de position selon au moins l'une des revendications précédentes, **caractérisé en ce que** les éléments de déviation (25.1 - 25.4) sont réalisés sous la forme d'un réseau de diffraction linéaire de transmission.
